# EUROPEAN PATENT SPECIFICATION

(11) **EP 3 569 117 B1**
(45) Date of publication and mention of the grant of the patent: **07.07.2021**
(21) Application number: 18172659.7
(22) Date of filing: 16.05.2018
(51) Int. Cl.: A47J 43/046, A47J 43/07, A47J 36/24

(54) **FOOD PROCESSOR**
KÜCHENMASCHINE
ROBOT-MIXEUR

(43) Date of publication of application: 20.11.2019
(73) Proprietor: BSH Hausgeräte GmbH, 81739 München (DE)
(72) Inventor: Koscak, Ales, 6230 Postojna (SI); Uplaznik, Marko, 3312 Prebold (SI); Zilnik, Marko, 1218 Komenda (SI)

(56) References cited:
- EP-A1- 3 087 885
- FR-A1- 2 925 276
- US-A1- 2010 018 982
- US-A1- 2015 101 491

## Description

The present invention generally relates to devices that heat and mix, including food preparation appliances and, more particularly, to food processors for preparing food and beverages, including food and beverages which are heated and mixed.

Many different types of food stuff processing appliances have been disclosed, including industrial, chemical and food and beverage mixers and preparation appliances. Food processors have a motor-driven blade mounted at the bottom of a receptacle to chop, stir, whip or blend solids or liquids loaded into the receptacle. Conventionally, the blender blade is driven directly by a motor shaft, and is removable to allow the receptacle to be removed from a base in which the motor is housed or the blender blade can be permanently fixed to the bottom of the receptacle, and removed from the motor shaft together with the receptacle. The motor is electrically driven at various selectable speeds. The necessity to heat the food inside the receptacle and the need to disconnect the receptacle from the base for providing multifunctionality of the device, cause a lot of problems e.g. with ensuring the safety or comfortable use by the user. Usually the heat is produced by the electric heater mounted in the bottom of the receptacle and supplied form the grid by the electric contact disposed both on the bottom of receptacle and on the base. It enables that when the receptacle is appropriate mounted on the base, then the electric contacts provide electric power to the heater. Unprotected electric contacts can be dangerous for users, further the heater mounted in the receptacle usually makes impossible to wash it in the dishwasher.

The document WO2009103903 A1 discloses a heating container for a domestic appliance for preparing food and/or beverages, that comprises a container annular side wall and a heating bottom with a screen-printed heating member as well as an annular portion surrounding the heating bottom, the annular portion being assembled together with the heating bottom, and a layer of a polymer material connecting the annular portion with the heating bottom, wherein said layer of a polymer material covers the screen-printed heating member. According to the invention, the annular portion defines a lower annular wall extending underneath the heating bottom. The invention also relates to a domestic appliance for preparing food and/or beverages, that comprises a heating container having the above characteristics.

The document US2015101491 A1 discloses a soup maker that comprises a container mounted to an annular seat receiving a heat conducting pan that receives food to be cut by a cutter coupled with a transmission shaft driven by a motor. A heating pan abuts a bottom of the thermally conducting pan and is connected to a heating tube electrically connected to a power supply terminal. A temperature sensor abuts the heating pan. A base includes a coupling portion having a terminal hole and a sensor hole. A positioning plate presses against a positioning switch on the coupling portion when the annular seat couples with the coupling portion, with the power supply terminal and a coupling section of the temperature sensor respectively extending into the terminal hole and the sensor hole for electrical connection with the control circuit board, allowing the control circuit board to control the motor and the heating tube.

The document US9144348 B2 discloses a mechanical food treatment processor comprising a driving block topped by a bowl unit. The driving block comprises a motor connected to a rotation driving device configured to move a food treatment tool. The bowl unit comprises a functional element electrically supplied via an electric circuit connecting the bowl unit and the driving block. The electric circuit comprises at least two contacts between the bowl unit and the driving block. At least one of the contacts is achieved by the contact of two electrical contact surfaces, respectively located on an external surface of the bowl unit and on an external surface of the driving block. Each of the two electrical contact surfaces is substantially leveled with the external surface of the bowl unit or of the driving block. Such a configuration facilitates the cleaning of the external surfaces of the processor.

The objective of the present invention is to provide devices that heat and mix, including food preparation appliances and, more particularly, to food processors for preparing food and beverages, including food and beverages which are heated and mixed, wherein the heat is provided with the user-friendly way, thus maintaining the multifunctionality of the food processor.

In accordance with the present invention, there is provided a food processor comprising a base unit including a motor turning a drive mechanism. The drive mechanism is controlled by a control panel. There is possible to adjust the speed and the direction of the rotation of the motor, and type of work, e.g. pulse or continuous or other parameters. On the base unit is releasable disposed a receptacle. The receptacle has a recess to receive food, also a bottom portion, and rotating blades placed therein and driven by the drive mechanism for processing received food stuff, while the receptacle is in a working position on the base unit. The food processor also comprises an attachment which is arranged between the base unit and the receptacle for mechanically coupling the base unit with the receptacle and has a means for heating the receptacle and food contained therein. The base unit is intended for mounting directly on it other kitchen attachments as jug or bowls for mixing, blending or cutting food namely for processing food that do not require heating. Because of high temperature which is needed for processing food, the receptacle at least partially has been made of a material resistant to temperature.

The term working position designates a position of the receptacle on the base unit in which the receptacle is fixed on the base unit by using the attachment and in which the transmission of the torque produced by the drive mechanism to the rotating blades is provided.

Additionally in accordance with the present invention the attachment comprising the mounting means, the second portion of the fixing disposed in the upper portion, a base portion, the knob, an independent power supply provided with an attachment plug, the throughout hole, the hot plate and the base portion of the attachment creates support for placing the attachment on an approximately flat surface in which the hot plate creates hot surface for receiving a cookware for using the attachment as a stove or a cooker.

Advantageously, the food processor provided with the attachment gives opportunity for preparing food and beverages, including food and beverages which are heated and mixed, wherein the heat is provided with the user-friendly way, thus maintaining the multifunctionality of the food processor, and cause the receptacle doesn't comprise any electric circuit, it can be washed in the dishwasher. Additionally, the attachment provides fully functional electric stove or cooker.

In preferred embodiment the attachment comprises a hot plate which at least partially covering an upper portion surface of the attachment. The attachment has axially arranged a throughout hole. Said throughout hole is arranged so that when the attachment is placed on the base unit and the receptacle is mounted to the attachment, then the throughout hole creates space for receiving a drive shaft coupling the drive mechanism with the rotating blades disposed in the receptacle.

In another preferred embodiment the food processor is provided with the attachment releasable mounted on the base unit by a mounting means, wherein the mounting means is suitable for mounting and positioning on the base unit also other kitchen attachments of the food processor having rotating tools like cutting blades, stirrers, hook for kneading the dough or other tools for food stuff processing and driven by the drive mechanism. It causes that mounting means is unified for broad scope of attachment which would be mounted on the base unit, therefore multifunctionality of the food processor will be extended.

Advantageously, the food processor has the receptacle which is releasable fixed on the attachment by a first portion of the fixing means disposed on the receptacle and a second portion of the fixing means disposed on the attachment. As the fixing means, can be used bayonet connection or snap connection or other connection enabling repeatable a detachable connection between the receptacle and the attachment. All means for heating the receptacle mounted on the attachment, as a power supply, an electric heater, a power control are disposed in the attachment, therefore the receptacle is free of the parts sensitive to water, therefore the receptacle is adapted to be washed in the dishwasher.

In another preferred embodiment the food processor characterized in that the first portion of the fixing means is disposed on an annular protrusion extending from a bottom portion in the opposite direction to a recess of the receptacle recess, which creates space for receiving the upper portion of the attachment. This ensures firmly fixing the receptacle on the attachment, because an inner diameter of the annular protrusion extending from the bottom fits the outer diameter of the upper portion of the attachment what provide an additional support.

Advantageously, the food processor comprises the base unit on which is mounted the attachment and the receptacle is fixed to the attachment, while at least a part of the hot plate is in the contact with the bottom portion of the receptacle. The contact between hot plate and the receptacle a specially within the bottom portion is advantageous for good thermal conductivity and effective heating food collected in the receptacle.

The food processor has the attachment provided with an independent power supply having an attachment plug. The attachment plug with a power cord allows independently supply the attachment from the grid. For this reason the base unit doesn't need any electrical contact to have which could be dangerous for user. Advantageously the attachment has the temperature regulation of hot plate by means of a knob, therefore the temperature can be adjusted to processed food stuff.

In another preferred embodiment food processor has the base unit with drive mechanism having a serrated peripherally axial recess for receiving a serrated cylindrical end of the drive shaft to create mechanical connection. Accordingly a serrated second cylindrical end of the drive shaft is intended to create mechanical connection with the rotating blades. The drive shaft is detachable connected to the drive mechanism and to the rotating blades to transmit the torque from the motor to the rotating blades, therefore after replacement the attachment to the jug or bowl or other an attachment the drive mechanism can drive rotatable tools of said attachments.

The attachment comprises the mounting means, the second portion of the fixing disposed in the upper portion, a base portion, the knob, an independent power supply provided with an attachment plug, the throughout hole, the hot plate and has the base portion of the attachment creating support for placing the attachment on an approximately flat surface wherein the hot plate creates surface for receiving a cookware for using the attachment as a stove or a cooker. The attachment is designated for using it as a part of the food processor for heating and processing food stuff, therefore is possible to prepare hot soup or beverage. The same attachment can be used as fully functional the stove or the cooker, in this case the base portion is designed to put on the table or worktop. The fixing means and the throughout hole are used during the attachment is used with the receptacle on the food processor. When the attachment is used as a stove or cooker the throughout hole can be covered to increase the hot plate area.

The objective of the present invention was achieved by providing devices that heat and mix, including food preparation appliances and, more particularly, namely food processors having the attachment for heating the receptacle, and therefore ready to prepare food and beverages, including food and beverages which are heated and mixed, wherein the heat is provided with the user-friendly way, and maintaining the multifunctionality of the food processor.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings.

Further benefits and advantages of the present invention will become apparent after a careful reading of the detailed description with appropriate reference to the accompanying drawings.
Fig. 1 shows the perspective view of food processor,
Fig. 2 shows an explosion drawing of the food processor,
Fig. 3 shows a perspective view of the attachment,

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

Typically devices that heat and mix, the food stuff, also include kitchen devices what are known as food processors comprising a base unit including a motor turning a drive mechanism, a heated receptacle to receive and heat food for mixing and cooking, releasable disposed on the base unit including a bottom portion, a recess and rotating blades placed therein and driven by the drive mechanism when the receptacle is in a working position on the base unit. A control panel is disposed on the base unit.

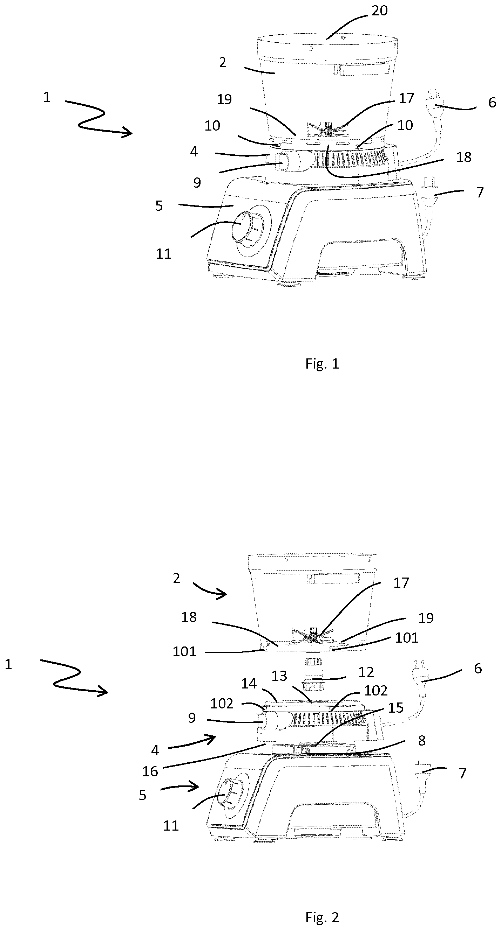

Referring to the Fig.1-2 which show the perspective view and explosion drawing of a food processor 1 and its , the food processor 1 comprises, a base unit 5 having a control panel 11, and a drive mechanism 15. The base unit 5 also comprises a mounting means 8. The base unit 5 provides a support for an attachment 4 mounted on the base unit 5 on its top portion by using the mounting means 8. The base unit 5 has a motor (not shown on these figures) for driving the drive mechanism disposed on the top portion of the base unit 5. The motor is supplied from the electric grid by using electric cord ended with a device plug 7. The rotational speed and type of work of the motor (cyclically interrupted or continuous work or direction of the rotation) is controlled by the control panel. The attachment 4 is provided with independent power supply from the electric grid by using an electric cord ended with an attachment plug 6. The attachment also comprises a knob 9 providing a regulation of the temperature of a hot plate 14. The hot plate 15 is disposed on the upper surface of the attachment 4. The hot plate 15 is heated by an electric heater (not shown on this figure). The food processor 1, also comprises a receptacle 2 fixed to the attachment 4 by using a fixing means 10. The fixing means 10 has a first portion 101 disposed on the receptacle 2 and a second portion 102 disposed on an annular protrusion 18. The first portion 101 has a shape of inverted L-letter shape series openings that cooperate with the second portion 102 as pins respectively disposed on the side upper portion of the attachment 4. Fixing the receptacle 2 to the attachment 4 is done by insertion the pins in the inverted L-shaped opening and rotation the receptacle 2 with respect each other. The attachment 4 has a axial throughout hole 13 which creates the space for receiving a driving shaft 12. The receptacle 2 has a recess 20 for receiving food stuff for processing it. The receptacle 2 also comprises a rotating blades 17 disposed inside on its bottom, the annular protrusion 18 extends from a bottom portion 19, and the bottom portion 19. One end of the drive shaft 12 is releasable and mechanically connected to the drive mechanism 15 accordingly a second end of the drive shaft 12 is releasable and mechanically connected to the rotating blades 17 for transmitting the motion and the torque from the drive mechanism 15 to the rotating blades 17. The hot plate 14 has the shape of ring with central throughout hole 13 and touches the bottom portion 19 from the opposite to the recess 20 side. The bottom portion 19 of the receptacle 2 is made of the metal to provide temperature resistance.

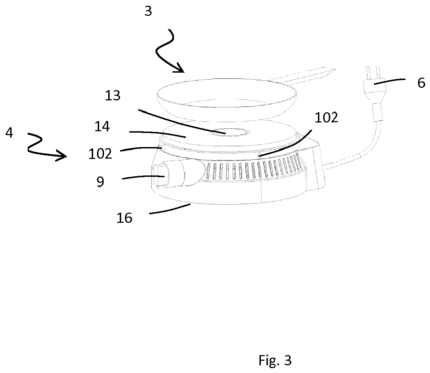

Referring to the Fig.3 which shows the perspective view of the attachment, the attachment comprises the second portion 102 of the fixing means 10 disposed in the upper portion, the base portion 16, the knob 9, an independent power supply provided with the attachment plug 6, the throughout hole 13, the hot plate 14 in which the base portion 16 of the attachment 4 creates support for placing the attachment 4 on an approximately flat surface wherein the hot plate 14 creates surface for receiving a cookware 3 for using the attachment 4 as a stove or a cooker. The throughout hole 13 and the second portion 102 of the fixing means 10 is not used when the attachment is used as an independent a stove or a cooker. The attachment 4 also comprises electric or electronic means (not shown on this figure) for controlling the temperature of the hot plate 14.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

### List of reference signs:

- 1: food processor
- 2: receptacle
- 3: cookware
- 4: attachment
- 5: base unit
- 6: attachment plug
- 7: device plug
- 8: mounting means
- 9: knob
- 10: fixing means
- 101: first portion
- 102: second portion
- 11: control panel
- 12: drive shaft
- 13: throughout hole
- 14: hot plate
- 15: drive mechanism
- 16: base portion
- 17: rotating blades
- 18: annular protrusion
- 19: bottom portion
- 20: recess

## Claims

1. Food processor (1) comprising a base unit (5) including a motor turning a drive mechanism (15), a receptacle (2) to receive food, releasable disposed on the base unit (5), including a bottom portion (19), a recess (20) and rotating blades (17) placed therein and driven by the drive mechanism (15) when the receptacle (2) is in a working position on the base unit (5) and the food processor (1) has an attachment (4) arranged between the base unit (5) and the receptacle (2), wherein the attachment (4) is arranged for mechanically coupling the base unit (5) with the receptacle (2) and has a means for heating the receptacle (2) and food contained therein **characterized in that** the attachment (4) comprises a base portion (16), a knob (9), an independent power supply provided with an attachment plug (6), an electric heater, a hot plate (14), wherein the base portion (16) of the attachment (4) creates support for placing the attachment (4) on an approximately flat surface and the hot plate (14) creates surface for receiving a cookware (3) for using the attachment (4) as a stove or a cooker.

2. The food processor (1) according to claim 1, **characterized in that** the attachment (4) comprises the hot plate (14) at least partially covering an upper portion surface of the attachment (4), and has arranged a throughout hole (13) wherein the throughout hole (13) is arranged so that when the attachment (4) is placed on the base unit (5) and the receptacle (2) is mounted to the attachment (4), then the throughout hole (13) creates space for receiving a drive shaft (12) coupling the drive mechanism (15) with the rotating blades (17).

3. The food processor (1) according to claim 1 or 2 **characterized in that** the attachment (4) is releasable mounted on the base unit (5) by a mounting means (8), wherein the mounting means (8) is suitable for mounting and positioning on the base unit (5) also other kitchen attachments for the food processor (1) having rotating tools for food stuff processing and driven by the drive mechanism (15).

4. The food processor (1) according to any of the preceding claim **characterized in that** the receptacle (2) is releasable fixed on the attachment (4) by a first portion (101) of a fixing means (10) disposed on the receptacle (2) and a second portion (102) of the fixing means (10) disposed on the attachment (4).

5. The food processor (1) according to claim 4, **characterized in that** the first portion (101) of the fixing means (10) is disposed on a annular protrusion (18) extending from the bottom portion (19) in the opposite direction to a recess (20) of the receptacle (2) recess, what creates space for receiving the upper portion of the attachment (4).

6. The food processor (1) according to any of the preceding claim **characterized in that** when the receptacle (2) is fixed to the attachment (4), at least a part of the hot plate (14) is in the contact with the bottom portion (19) of the receptacle (2).

7. The food processor (1) according to any of the preceding claim **characterized in that** the temperature of the hot plate (14) is regulated by a knob (9).

8. The food processor (1) according to any of the preceding claim **characterized in that** the drive mechanism (15) has a serrated peripherally axial recess for receiving a serrated cylindrical end of the drive shaft (12) to create mechanical connection, and a serrated second cylindrical end of the drive shaft (12) is intended to create mechanical connection with the rotating blades (17).

## Patentansprüche

1. Küchenmaschine (1), die Folgendes umfasst: ein Grundgerät (5) mit einem Motor, der einen Antriebsmechanismus (15) dreht, einen Behälter (2) zum Aufnehmen von Lebensmitteln, der lösbar auf dem Grundgerät (5) angeordnet ist, mit einem unteren Abschnitt (19), einer Vertiefung (20) und darin angeordneten rotierenden Klingen (17), die von dem Antriebsmechanismus (15) angetrieben werden, wenn sich der Behälter (2) in einer Arbeitsposition auf dem Grundgerät (5) befindet, und wobei die Küchenmaschine (1) ein Aufsatzteil (4) aufweist, das zwischen dem Grundgerät (5) und dem Behälter (2) der Küchenmaschine (1) angeordnet ist, wobei das Aufsatzteil (4) zum mechanischen Koppeln des Grundgeräts (5) mit dem Behälter (2) angeordnet ist und ein Mittel zum Erwärmen des Behälters (2) und von darin enthaltenen Lebensmitteln aufweist, **dadurch gekennzeichnet, dass** das Aufsatzteil (4) einen Grundabschnitt (16), einen Knopf (9), eine mit einem Aufsatzteilstecker (6) versehene unabhängige Stromversorgung, eine elektrische Heizvorrichtung, eine Heizplatte (14) umfasst, wobei der Grundabschnitt (16) des Aufsatzteils (4) als Unterlage zum Platzieren des Aufsatzteils (4) auf einer in etwa ebenen Fläche und die Heizplatte (14) als Fläche zum Aufnehmen eines Kochtopfs (3) zur Verwendung des Aufsatzteils (4) als Herd oder Kochgerät dient.

2. Küchenmaschine (1) nach Anspruch 1, **dadurch gekennzeichnet, dass** das Aufsatzteil (4) die Heizplatte (14) umfasst, die eine Fläche eines oberen Abschnitts des Aufsatzteils (4) zumindest teilweise bedeckt, und dass sich in ihm ein Durchgangsloch (13) befindet, wobei das Durchgangsloch (13) so angeordnet ist, dass es, wenn das Aufsatzteil (4) auf dem Grundgerät (5) platziert und der Behälter (2) an dem Aufsatzteil (4) befestigt ist, Platz zum Aufnehmen einer Antriebswelle (12) schafft, die den Antriebsmechanismus (15) mit den rotierenden Klingen (17) koppelt.

3. Küchenmaschine (1) nach Anspruch 1 oder 2, **dadurch gekennzeichnet, dass** das Aufsatzteil (4) über ein Befestigungsmittel (8) lösbar an dem Grundgerät (5) befestigt ist, wobei sich das Befestigungsmittel (8) dazu eignet, auch andere Küchenaufsatzteile für die Küchenmaschine (1) mit von dem Antriebsmechanismus (15) angetriebenen rotierenden Werkzeugen für die Lebensmittelverarbeitung an dem Grundgerät (5) zu befestigen und zu positionieren.

4. Küchenmaschine (1) nach einem der vorhergehenden Ansprüche, **dadurch gekennzeichnet, dass** der Behälter (2) über einen an dem Behälter (2) angeordneten ersten Abschnitt (101) eines Fixiermittels (10) und einen an dem Aufsatzteil (4) angeordneten zweiten Abschnitt (102) des Fixiermittels (10) lösbar an dem Aufsatzteil (4) fixiert ist.

5. Küchenmaschine (1) nach Anspruch 4, **dadurch gekennzeichnet, dass** der erste Abschnitt (101) des Fixiermittels (10) an einem ringförmigen Vorsprung (18) angeordnet ist, der sich von dem unteren Abschnitt (19) aus in entgegengesetzter Richtung zu einer Vertiefung (20) der Vertiefung des Behälters (2) erstreckt, wodurch Platz zum Aufnehmen des oberen Abschnitts des Aufsatzteils (4) geschaffen wird.

6. Küchenmaschine (1) nach einem der vorhergehenden Ansprüche, **dadurch gekennzeichnet, dass** sich, wenn der Behälter (2) an dem Aufsatzteil (4) fixiert ist, zumindest ein Teil der Heizplatte (14) mit dem unteren Abschnitt (19) des Behälters (2) in Kontakt befindet.

7. Küchenmaschine (1) nach einem der vorhergehenden Ansprüche, **dadurch gekennzeichnet, dass** die Temperatur der Heizplatte (14) über einen Knopf (9) reguliert wird.

8. Küchenmaschine (1) nach einem der vorhergehenden Ansprüche, **dadurch gekennzeichnet, dass** der Antriebsmechanismus (15) eine geriffelte, um den Umfang herum axiale Vertiefung zum Aufnehmen eines geriffelten zylinderförmigen Endes der Antriebswelle (12) und somit zum Herstellen einer mechanischen Verbindung aufweist und ein geriffeltes zweites zylinderförmiges Ende der Antriebswelle (12) dazu dient, eine mechanische Verbindung mit den rotierenden Klingen (17) herzustellen.

## Revendications

1. Robot-mixeur (1) comprenant une unité de base (5) comportant un moteur faisant tourner un mécanisme d'entraînement (15), un réceptacle (2) pour recevoir des aliments, disposé de manière détachable sur l'unité de base (5), comportant une partie de fond (19), une cavité (20) et des lames rotatives (17) placées dans celle-ci et entraînées par le mécanisme d'entraînement (15) lorsque le réceptacle (2) est dans une position de travail sur l'unité de base (5) et le robot-mixeur (1) possède un accessoire (4) agencé entre l'unité de base (5) et le réceptacle (2), dans lequel l'accessoire (4) est agencé pour coupler mécaniquement l'unité de base (5) avec le réceptacle (2) et possède un moyen pour chauffer le réceptacle (2) et les aliments contenus dans celui-ci, **caractérisé en ce que** l'accessoire (4) comprend une partie de base (16), un bouton (9), une alimentation électrique indépendante munie d'une prise de branchement (6), un élément chauffant électrique, une plaque chauffante (14), dans lequel la partie de base (16) de l'accessoire (4) crée un support pour placer l'accessoire (4) sur une surface approximativement plate et la plaque chauffante (14) crée une surface pour recevoir une casserole (3) pour utiliser l'accessoire (4) comme un réchaud ou une cuisinière.

2. Robot-mixeur (1) selon la revendication 1, **caractérisé en ce que** l'accessoire (4) comprend la plaque chauffante (14) recouvrant au moins partiellement une surface de partie supérieure de l'accessoire (4), et un trou traversant (13) y est agencé, dans lequel le trou traversant (13) est agencé de sorte que lorsque l'accessoire (4) est placé sur l'unité de base (5) et le réceptacle (2) est monté sur l'accessoire (4), alors le trou traversant (13) crée un espace pour recevoir un arbre d'entraînement (12) couplant le mécanisme d'entraînement (15) avec les lames rotatives (17).

3. Robot-mixeur (1) selon la revendication 1 ou 2 **caractérisé en ce que** l'accessoire (4) est monté de manière détachable sur l'unité de base (5) par un moyen de montage (8), dans lequel le moyen de montage (8) est approprié pour monter et positionner sur l'unité de base (5) également d'autres accessoires de cuisine pour le robot-mixeur (1) ayant des outils rotatifs pour le traitement de produits alimentaires et entraînés par le mécanisme d'entraînement (15).

4. Robot-mixeur (1) selon l'une quelconque des revendications précédentes **caractérisé en ce que** le réceptacle (2) est fixé de manière détachable sur l'accessoire (4) par une première partie (101) d'un moyen de fixation (10), disposée sur le réceptacle (2) et une seconde partie (102) du moyen de fixation (10), disposée sur l'accessoire (4).

5. Robot-mixeur (1) selon la revendication 4, **caractérisé en ce que** la première partie (101) du moyen de fixation (10) est disposée sur une saillie annulaire (18) s'étendant à partir de la partie de fond (19) dans la direction opposée à une cavité (20) de la cavité de réceptacle (2), ce qui crée un espace pour recevoir la partie supérieure de l'accessoire (4).

6. Robot-mixeur (1) selon l'une quelconque des revendications précédentes **caractérisé en ce que** lorsque le réceptacle (2) est fixé à l'accessoire (4), au moins une partie de la plaque chauffante (14) est en contact avec la partie de fond (19) du réceptacle (2).

7. Robot-mixeur (1) selon l'une quelconque des revendications précédentes **caractérisé en ce que** la température de la plaque chauffante (14) est régulée par un bouton (9).

8. Robot-mixeur (1) selon l'une quelconque des revendications précédentes **caractérisé en ce que** le mécanisme d'entraînement (15) possède une cavité axiale périphérique dentelée pour la réception d'une extrémité cylindrique dentelée de l'arbre d'entraînement (12) pour créer une liaison mécanique, et une seconde extrémité cylindrique dentelée de l'arbre d'entraînement (12) est destinée à créer une liaison mécanique avec les lames rotatives (17).
